# EUROPEAN PATENT SPECIFICATION

(11) **EP 2 901 861 B1**
(45) Date of publication and mention of the grant of the patent: **02.08.2017**
(21) Application number: 15152997.1
(22) Date of filing: 29.01.2015
(51) Int. Cl.: A22B 5/16

(54) **Skinning apparatus**
Enthäutungsvorrichtung
Appareil de dépouillage

(30) Priority: 03.02.2014 DK 201400059
(43) Date of publication of application: 05.08.2015
(73) Proprietor: Hedensted Gruppen A/S, 8722 Hedensted (DK)
(72) Inventor: Madsen, Jens Jørgen, 5220 Odense SØ (DK); Lange, Kent, 8763 Rask Mølle (DK); Hansen, Mikael Riishede, 8700 Horsens (DK)
(74) Representative: COPA Copenhagen Patents

(56) References cited:
- EP-A1- 0 894 437
- US-A- 3 046 597
- US-A- 3 443 275
- US-A1- 2008 081 548

## Description

### TECHNICAL FIELD

The present invention relates to a skinning apparatus for skinning fur animals, especially minks, which have been cut open along and between the legs, and from which skin has been loosened and freed from the rear portion of the body and the rear legs and the tail, said apparatus comprising:
- a frame having a front, a rear, a top and a bottom
- a body-clamping device for clamping said legs and/or rear portion of the body freed for the skin in a start and body-clamping position and being accessible at the front,
- a skin clamping device for clamping the skin freed from the body and being by means of a moving means arranged for a downwardly and rearwardly movement between an upper start and skin-clamping position and a lower position at a distance from the upper skin-clamping position and in which the skin has been completely separated from the body,
- the skin-clamping device being in the upper skin-clamping position positioned adjacent to the body-clamping device and being accessible at the front.

### BACKGROUND OF THE INVENTION

Skinning apparatuses of the above stated type are known US 2008/081548 A1, US 3 046 597 A, DK 176 580 B1 and DK 165 768 B having a moving means formed by a swivel arm. In the apparatuses disclosed in these references, the body portion initially freed from the skin is clamped in the upper clamping device with the back of the animal facing forwards, while the swivel arm is positioned in a downwardly pivoted position thereof. The operator then draws additional skin from the body in order to provide a larger portion of freed skin. The swivel arm is then pivoted upwards into its upper position. The mentioned apparatuses are arranged in such a way that the skin-clamping device passes by the body clamped in the body-clamping device when the skin-clamping device is moved into its skin-clamping position which allows for clamping the back of the freed skin. When the freed skin portion has been clamped, the swivel arm is pivoted downwardly and into its end position, and the skin is thereby fully removed from the body. Pulling off additional skin from the body is a demanding, hard and time-consuming job for the operator of the apparatus. Additionally, it is time consuming to move the swivel arm from the lower end position to the upper clamping position of the skin-clamping device after clamping the body portion in the body-clamping device.

### SUMMARY OF THE INVENTION

The object of the present invention is to eliminate or reduce the drawbacks of the above known apparatuses.

The above problems are solved by an apparatus according to the invention being characterised in that
- the skin-clamping device comprises an upper fixed jaw and a lower displaceable jaw being displaceable away from and towards the fixed jaw between an open position and a closed clamping position.
- the upper fixed jaw is a forwardly open jaw comprising a pair of optionally mutually connected arms shaped to define a forwardly open cavity with a forwardly facing opening and having a lower clamping face and an inner surface defining the forwardly open cavity shaped and dimensioned to receive the body portion freed from skin.
- the lower displaceable jaw is a forwardly open jaw comprising a pair of optionally mutually connected arms shaped to define a forwardly open cavity with a forwardly facing opening and having an upper clamping face and an inner surface defining the forwardly open cavity shaped and dimensioned to receive the body portion not being freed from skin.
- the upper clamping surface of the lower displaceable jaw is in the open position thereof spaced from the lower clamping surface to receive the freed skin portion between said clamping faces.

In the skin-clamping position, the skin-clamping device is positioned in close proximity to the body-clamping device allowing the animal to be arranged in said clamping device with the back thereof facing outwardly, i.e. the legs to be arranged in the body clamping device, the rear portion of the body freed from skin to be arranged in the cavity of the upper jaw through the opening thereof, the freed skin portion to be arranged between the upper and lower jaw, and the body portion not freed from skin to be arranged in the cavity of the lower jaw through the opening thereof.

Initially, the legs are clamped in the body-clamping device. The lower displaceable jaw of the skin-clamping jaw is then displaced towards the fixed jaw, and the freed skin portion is thereby clamped in the skin-clamping device.

At least the lateral areas of the initially freed skin portion are clamped in the skin-clamping device.

Finally, the skin-clamping device is moved downwardly by means of the skin moving means in order to carry out the skinning. As the legs of the animal can be placed and clamped in the body-clamping device, and the freed skin portion can be placed and clamped in the skin-clamping device in the start position of the clamping devices, there is no need for the operator to carry out the demanding, hard and time-consuming work of drawing additional skin from the body before clamping the skin in the skin-clamping device.

In other words, the apparatus according to the invention allows for skinning animals without the need of carrying out a manual extension of the initially freed skin portion. Further, the apparatus according to the invention allows for skinning animals having a considerable shorter initially free skin portion than the above-mentioned known apparatuses.

According to an embodiment, the skin-moving means comprises a swivel arm, the skin-clamping device being arranged at a first end of the swivel arm, a second end of the swivel arm being pivotally connected to the frame, said skin-clamping device being by means of the arm pivotal between the upper start and skin-clamping position and lower position, and the upper fixed jaw being connected to the swivel arm and the lower displaceable jaw being displaceably connected to the swivel arm.

In an embodiment, the skin moving means comprises a conveyer, chain drive and/or a track to which the skin-clamping device is connected.

According to an embodiment of the invention, the cavity of the lower displaceable jaw is shaped and dimensioned so that the inner surface thereof engages at least opposite lateral portions of the body not freed from skin when the body is received in the cavity. As a result thereof, the not yet skinned portions of the animal is positioned correctly in the skin-clamping device.

According to an additional embodiment, the cavity of the fixed jaw is shaped and dimensioned so that the inner surface thereof engages at least lateral portions of the body freed from skin when the body is received in the cavity, thereby ensuring that the body portion freed from skin is positioned correctly in the skin-clamping device.

In a further embodiment according to the invention, the arms of the lower displaceable jaw of the skin-clamping device are elongated arms providing an elongated inner surface, as seen in the displacement direction thereof, said inner surface providing a support face for a body received in the cavity defined by the elongated arms.

When the lower displaceable jaw has a length providing a support face for the animal, it is more convenient for the operator to arrange the animal in the clamping devices.

The support face of the elongated displaceable jaw is in the start and clamping position of the skin-clamping device preferably sloping slightly forwardly and downwardly as seen from the upper fixed jaw.

The slope angle can be 5-35°, preferably 5-25°.

The elongated arms and thereby the support face thereof can have a length of at least 5 cm, 10 cm, 15 cm or 20 cm.

The lower displaceable jaw can have a cross section essentially corresponding to that of a trough, such as an essentially U-shaped or V-shaped cross-section.

The upper fixed jaw can have a cross section essentially corresponding to that of a trough, such as a U-shaped or V-shaped cross section.

In an advantageous embodiment, the apparatus, optionally the skin-clamping device thereof, is provided with a tail clamp for clamping the freed skin of the tail of a body received in the skin-clamping device, the tail clamp being arranged movably between a tail-clamping position in which the tail is clamped between jaws of the tail clamp and a rest position or inactive position in which the tail clamp is positioned laterally outside a vertical area defined by the openings of the skin-clamping device.

As the tail clamp in its rest or inactive position is laterally outside a vertical area defined by the openings of the jaws of the skin-clamping device, it does not interfere when the legs are clamped in the body-clamping device and the rest of the animal is arranged in the skin-clamping device, as the tail clamp is not moved into the clamping position and the tail is not clamped until after the animal has been arranged in the clamping devices.

According to an embodiment, the tail clamp is arranged at a first end of a tail clamp arm, a second end of the tail clamp arm being arranged pivotally relative to the skin-clamping device, the tail clamp being, by means of the tail clamp arm, pivotal between the inactive or rest position and the clamping position.

When the skin-movement means is a swivel arm, the second end of the tail clamp arm can be connected pivotally to the swivel arm at the first end thereof.

In an additional embodiment, the tail-clamping position is essentially defined by the lower clamping face of the upper fixed jaw of the skin-clamping device and the tail clamp arranged to clamp the tail in said plane and preferably in a position essentially directly in front of the opening of the upper jaw of the skin-clamping device. As a result thereof, the skin-clamping device and the tail clamp pull the skin off the body essentially simultaneously when the skin-clamping device is moved downwardly from the start position.

In a further embodiment, the apparatus comprises a body movement means cooperating with or being a part of the body-clamping device for providing an upwardly and rearward movement of the body clamped therein between the clamping and start position thereof to a discharge position where the body completely freed from the skin is discharged.

The body movement means may comprise an upwardly and rearward extending conveyer, chain drive and/ or track to which the body-clamping device is connected. Alternatively, the body movement means can be one or more pairs of oppositely arranged rollers or oppositely arranged conveyers such as belt conveyers provided with engagement means, such as spikes, engaging the body as disclosed in DK 176580 B1. In an embodiment, the body movement means is arranged to move the body-clamping device with at least two different speeds from the clamping position to the discharge position, comprising a first speed and a second speed, the first speed being higher than the second speed.

The first high speed is used during the skinning af the animal from the rear portion thereof and up to about the shoulder of the front legs of the animal, whereupon the second low speed is used.

In an additional embodiment, the movement means is provided with stop means slowing down, and/or interrupting or stopping the movement of the body-clamping device at one or more adjustable intermediate positions between the clamping positions and the discharge position.

It is thereby possible to adjust the length of movement of the movement of the body-clamping device away from its start and clamping position in dependency of the length of the animal to be skinned. Additionally, the clamping may continue the movement from said stop position to a discharge position where the body freed from the skin is discharged.

According to a further embodiment of the invention, the skin moving means is arranged to move the skin-clamping device with at least two different speeds comprising a first predefined speed and a second predefined speed, the first predefined speed being higher than the second predefined speed.

The first predefined speed is used from the beginning of the skinning and up to the skinning of the shoulder at the front legs of the body, whereafter the second lower speed is used. When skinning the area at the head, the speed is preferable reduced to a low speed optionally a speed about zero in order to be able to free the skin from the head.

In an embodiment, the skin moving means is provided with stop means for slowing down and/or interrupting or stopping the movement of the skin-clamping device at one or more adjustable positions between the upper start and skin clamping position and the lower end position.

The apparatus can have a transverse skin-supporting member, such as a roller, provided between the body-clamping device and the skin-clamping device, said transverse skin-supporting member being arranged to support the body being freed from skin during the skinning.The apparatus may comprise an additional clamping device for clamping the body freed from the skin in the area of the shoulder area of the front legs during skinning of the head portion of the animal.

The additional clamping device can comprise a shoulder clamp arranged at an forward end of a bar connected moveably to the frame between a retracted inactive rest position and a forwardly projecting clamping position clamping the shoulder area of the front legs. The additional clamping device may comprise two cooperating jaws cooperating to clamp said shoulder area.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 is a diagrammatical lateral view of an embodiment of an apparatus according to the invention in a start position thereof
Fig. 2 is a lateral view corresponding to that of Fig. 1 in an end position in which the animal has been fully skinned
Fig. 3 is a front view of the apparatus shown in Fig. 1
Fig. 4 is a front view of the apparatus shown in Fig. 2
Fig. 5 is a perspective view of a section of the apparatus with a body-clamping device and a skin-clamping device in the start position thereof ready to clamp respective portions of an animal to be skinned
Fig. 6 is a view corresponding to that in Fig. 5 with portions of the animal clamped in the respective clamping devices, and
Fig. 7 is a view corresponding to that in Fig. 6 just prior to the finishing of the skinning, the skinned body and the removed skin not being shown.

### DETAILED DESCRIPTION OF THE INVENTION

The embodiment of the skinning apparatus shown in the drawings is arranged for skinning minks which have been cut open along the legs and from which the skin has been loosened and freed from the rear portion of the body, the rear legs and the tail.

The apparatus comprises a frame 1 having a front 2, rear 3 a bottom 4 and a top 5, and additionally a body-clamping device 6 for clamping the legs 7 and/or rear portion of the body of the mink and a skin-clamping device 8 for clamping the skin portion 9 freed from the body.

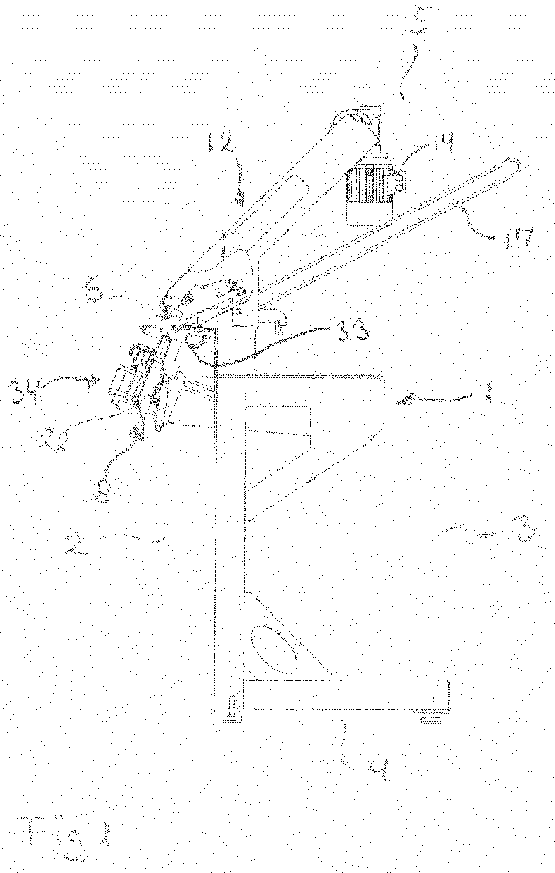

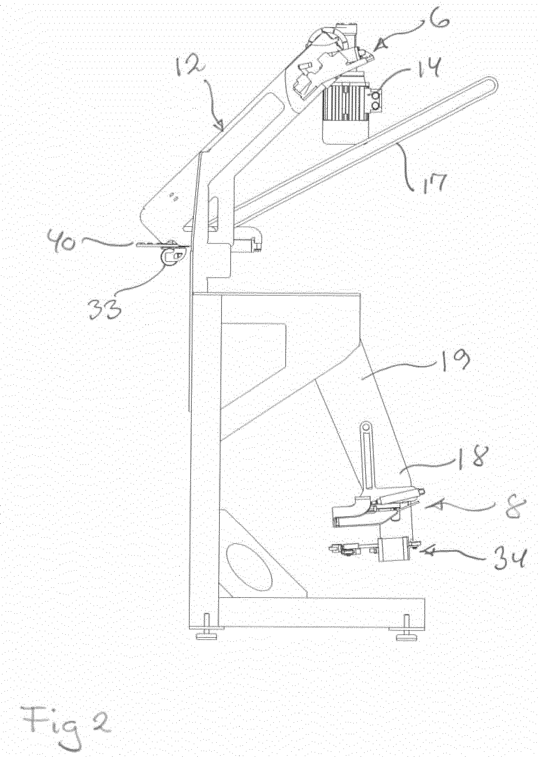

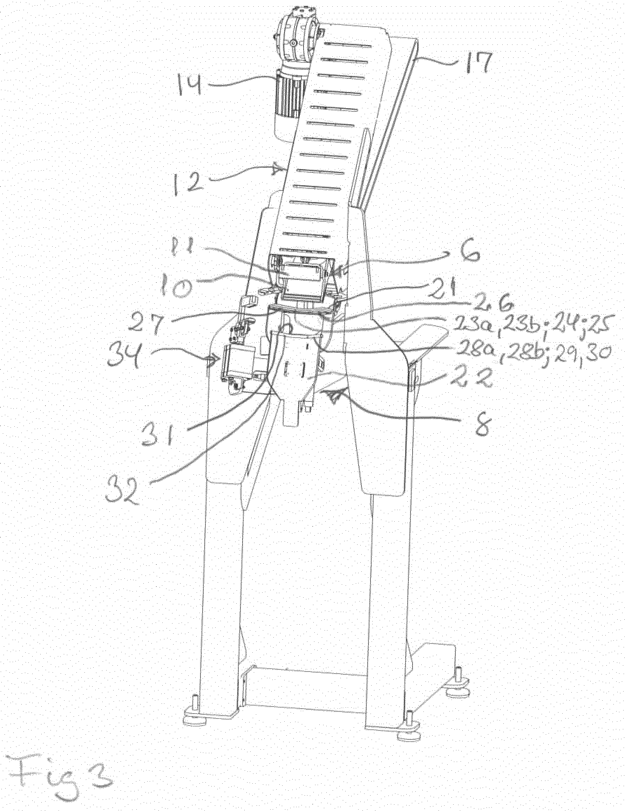

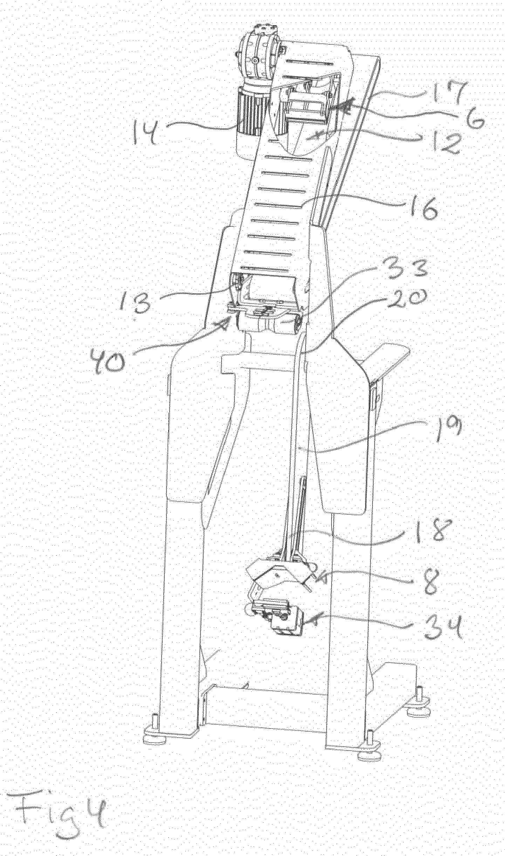

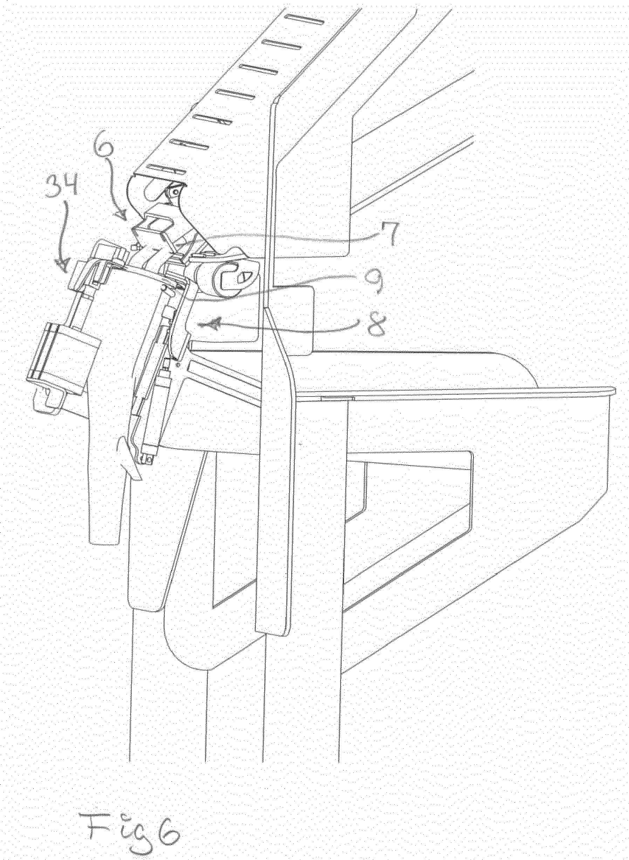

The body-clamping device 6 is accessible from the front in a clamping and start position thereof shown in Figs. 1, 3, 5 and 6 and arranged in an upper portion of the apparatus. The body-clamping device comprises a lower body-clamping jaw 10 and an upper moveable body-clamping jaw 11 movable between an open position shown in Figs. 1, 3 and 4 and a closed position shown in Fig. 6, and where it appears that the legs 7 have been clamped. The body-clamping device is arranged movably between the start position shown in Figs. 1, 3, 4 and 6 and an end position shown in Figs. 2 and 4 in which the body freed from the skin is discharged. The body-clamping device is moveable along a linear track 12 comprising a linear guide and a chain drive extending upwardly and rearward. A lower chain wheel 13 of the chain drive is visible in Figs. 3, 4 and 7.

An upper chain wheel is driven by a motor 14. The body clamping device 6 and the linear track 12 is covered by a downwardly open screen 16 allowing the skinned body be to discharged to a conveyer belt 17 arranged beneath the linear track 12 when the skinned body is released from the body-clamping device 6 in the end position thereof shown in Figs. 2 and 4 or another position between the start position and the end position. The chain drive including the motor is arranged for stopping the body-clamping device 6 at any preselected position between the start and the end position. Additionally the chain drive is arranged to move the body-clamping device 6 with at least two different speeds from the lower body clamping position and the upper discharge position, comprising a first speed and a second speed, the first speed being higher than the second speed and being preferably used during the first part of the skinning, the second speed being preferably used during the last more difficult part of the skinning.

The skin-clamping device 8 for clamping the skin freed from the body is arranged at a first outer end 18 of a swivel arm 19, a second end 20 thereof being pivotally connected to the frame 1.

By means of the swivel arm 19, the skin-clamping device 8 is pivotal between a clamping and start position shown in Figs. 1, 3, 5 and 6 in which it is accessible at the front 2 and positioned in close proximity to the body-clamping device 6 and an end position shown in Figs. 2 and 4 and in which the skin has been completely separated from the body. A drive for driving the swivel arm 19 is provided with stop means for stopping the pivotal movement of the arm at adjustable positions between the start and clamping position and the end position. Additionally, the drive of the swivel arm is arranged for pivoting the arm with at least two different speeds from the start position to the end position or an intermediate position comprising a first speed and a second speed, the first speed being higher than the second speed and being preferably used during the first part of the skinning, the second lower speed being preferably used during last more difficult skinning of the shoulder and head area of the animal.

The skin-clamping device 8 comprises an upper fixed jaw 21 connected to the swivel arm and a lower displaceable jaw 22 being displaceably connected to the swivel arm. The displaceable jaw 22 is linear displaceable away from and toward towards the fixed jaw 21 between an open position and a closed clamping position. In the open position, the spacing between the upper and lower jaw allows the previously loosened and freed skin portion to be inserted between the jaws and subsequently clamped between the jaws.

The upper fixed jaw 21 is a forwardly open jaw comprising a pair of arms 23a, 23b being shaped to define a forwardly open cavity 24 with a forwardly facing opening 25 and having a lower clamping face 26. The inner cavity is defined by an inner surface 27 and shaped and dimensioned to receive the body portion being freed from skin through the opening 25. The cavity 24 of the upper fixed jaw 21 is preferably dimensioned so that the inner surface thereof engages at least lateral portions of the body when the body is received in the cavity. In the embodiment shown, the upper fixed jaw is essentially V-shaped as most clearly shown in Figs. 3, 4 and 7.

The lower displaceable jaw 22 is a forwardly open jaw comprising a pair of arms 28a, 28b being shaped to define a forwardly open cavity 29 with a forwardly facing opening 30 and having an upper clamping face 31. The cavity 29 of the lower jaw 22 is defined by an inner surface 32 and shaped and dimensioned to receive the body portion not being freed from skin through the opening. Preferably and in the embodiment shown, the cavity 29 of the lower jaw 22 is dimensioned so that the inner surface 32 thereof engages at least lateral portions of the not skinned body when the body is received in the cavity 29. In the embodiment shown, the lower jaw 23 has an essentially V-shaped cross section and the inner surface 32 thereof formed by the arms thereof is elongated as seen in the displacement direction of the lower jaw. The inner surface thereby forms a support face for a body received in the cavity 29.

As clearly seen in Fig. 1, the skin-clamping device 8 and thereby also the lower jaw 22 is sloping upwardly and rearward towards the body-clamping device 6. Additionally, it can be seen from Fig. 1 that a horizontal roller 33 for supporting the body during the skinning is connected with the frame between the start position of the body-clamping device 6 and the start position of the skin-clamping device 8.

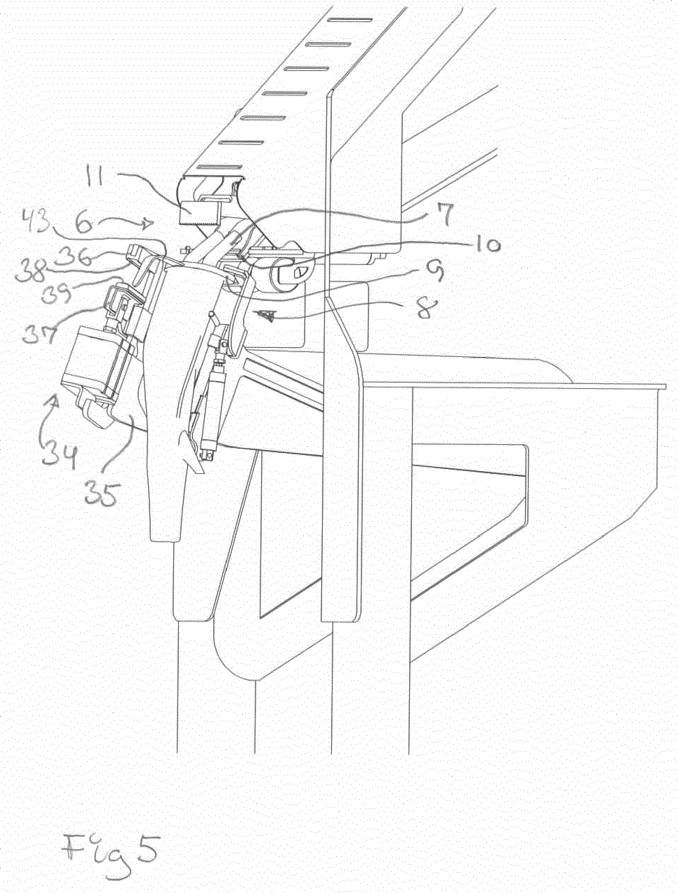

Reference is made to Figs. 1, 3, 5 and 6. As it appears, a tail clamp 34 for clamping the tail skin freed from the body is pivotally connected to the first outer end 18 of the swivel arm 19 by means of a tail clamp arm 35. By means of the tail clamp arm 35, the tail clamp 34 is pivotal between a tail-clamping position in which the tail skin is clamped between clamp jaws 36, 37 of the tail clamp, as shown in Fig. 6, and a rest position or inactive position in which the tail clamp is positioned laterally outside a vertical area defined by the openings of the jaws of the skin-clamping device, as shown in Figs. 3 and 5. The tail clamps 36, 37 are an upper fixed jaw 36 having a lower clamp face 38 and a lower moveable jaw 37 having an upper clamp face 39 and being moveable between an open and a closed position. In the clamping position of the tail clamp, the lower clamp face 38 of the upper clamp jaw 36 is positioned in a plane formed by the lower clamping face 26 of the upper fixes jaw 21 of the skin-clamping device 8. The pivotal connection of the tail clamp arm to the swivel is preferably arranged to move the lower clamp face 38 in the plane defined by the lower clamping face 26 of the upper fixed jaw 21 of the skin-clamping device. Further, in the clamping position, tail clamp 34 is positioned essentially directly in front of opening of the upper jaw 21 of the skin-clamping device.

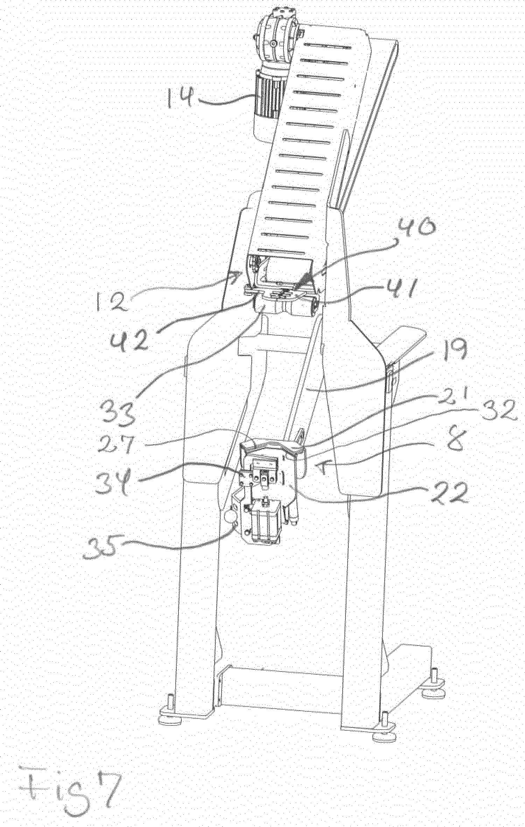

Further and as especially shown in Figs. 2, 3, 4, and 7, the apparatus comprises an additional device 40 arranged at a level between the body-clamping device 6 and the skin clamping device 8 in the start positions thereof. The additional clamping device comprises two clamping jaws 41, 42 movable between an open position shown in Figs. 3, 5 and 6, in which they do not interfere with the positioning or skinning of a mink to be skinned and a closed position in which the jaws clamp the body of the mink being skinned at the shoulder area of the front legs during skinning of the head region of the mink. The clamping position is shown in Figs. 4 and 7, however, the skinned body and the skin not being shown.

The apparatus operates as follows:

A mink is provided which has been cut open and from which the skin portion has been loosened and freed from the rear portion of the body and the rear legs and the tail.

In the start positions of the body-clamping device 6 and the skin-clamping device 8 shown in Figs. 1, 3 and 5, the mink is arranged in the said devices with the back facing forwardly. The legs 7 are clamped in the body-clamping device as illustrated in Figs. 5 and 6.

Then, the body portion freed from skin is arranged in the cavity of the upper jaw of the skin-clamping device 8, the freed skin portion is arranged in the opening between the jaws 21, 22 of the skin-clamping device 8 and the portion of the mink not freed from skin is arranged in the cavity of the lower jaw 22 of the skin-clamping device 8 as shown in Fig. 3.

Additionally, the tail clamp 34 is now pivoted into its tail-clamping position and the tail skin 43 is arranged between the jaws 36,37 thereof. Subsequently, the skin-clamping device 8 and the tail clamp 34 are closed as shown in Fig. 6. In this position, the body clamp 6 is moved upwardly along the track 12 and the swivel arm, and thereby the skin-clamping device is pivoted downwards. As a result of the above mentioned movement, the distance between the body-clamping device and the skin-clamping device is gradually increased and the mink thereby gradually skinned. When the skin has been drawn off to the point adjacent the head, the additional clamping device is activated and the shoulder area of the body clamped whereupon the reminder portion of the mink is skinned.

The first portion of the skinning advantageously takes place at a higher speed than the last part.

After skinning, the skinned body is dislodged onto the conveyer belt 17, the separated skin released from the skin-clamping device 8 and the tail clamp. Thereupon the different clamping devices are moved into the start positions thereof. The apparatus is then ready for skinning an additional mink.

### LIST OF REFERENCE NUMERALS

- 1: frame
- 2: front
- 3: rear
- 4: bottom
- 5: top
- 6: body-clamping device
- 7: legs
- 8: skin-clamping device
- 9: freed skin portion
- 10: lower body-clamping jaw
- 11: upper moveable body-clamping jaw
- 12: linear track
- 13: lower chain wheel
- 14: drive motor
- 16: screen
- 17: belt conveyer
- 18: first outer end
- 19: swivel arm
- 20: second end
- 21: upper fixed jaw
- 22: lower displaceable jaw
- 23a,23b: arm of fixed jaw
- 24: cavity of fixed jaw
- 25: opening of fixed jaw
- 26: lower clamping face
- 27: inner surface of fixed jaw
- 28a, 28b: arms of lower jaw
- 29: cavity of lower jaw
- 30: opening of lower jaw
- 31: upper clamping face
- 32: inner surface of lower jaw
- 33: horizontal roller
- 34: tail clamp
- 35: tail clamp arm
- 36: clamp jaw
- 37: clamp jaw
- 38: lower clamp face
- 39: upper clamp face
- 40: additional clamping device
- 41: clamping jaw
- 42: clamping jaw
- 43: tail skin

## Claims

1. A skinning apparatus for skinning fur animals, especially minks, which have been cut open along and between the legs and from which the skin has been loosened and freed from the rear portion of the body and the rear legs and the tail, said apparatus comprising
- a frame (1) having a front (2), a rear (3), a top (5) and a bottom (4)
- a body-clamping device (6) for clamping said legs (7) and/or rear portion of the body freed for the skin in a start and body-clamping position and being accessible at the front,
- a skin clamping device (8) for clamping the skin freed from the body and being by means of a skin moving means arranged for a downwardly and rearwardly movement of the skin-clamping device (8) between an upper start and skin-clamping position and a lower position at a distance from the upper skin-clamping position and in which the skin has been completely separated from the body,
- the skin-clamping device (8) being in the upper skin-clamping position positioned adjacent to the body-clamping device (6) and being accessible at the front, wherein
- the skin-clamping device (8) comprises an upper fixed jaw (21) and a lower displaceable jaw (22) being displaceable away from and towards the fixed jaw (21) between an open position and a closed clamping position
- the upper fixed jaw (21) is a forwardly open jaw comprising a pair of arms (23a,23b) shaped to define a forwardly open cavity (24) with a forwardly facing opening (25) and having a lower clamping face (26) and an inner surface (27) defining the forwardly open cavity shaped and dimensioned to receive the body portion freed from skin
- the lower displaceable jaw (22) is a forwardly open jaw comprising a pair of arms (28a,28b) shaped to define a forwardly open cavity (29) with a forwardly facing opening (30) and having an upper clamping face (31) and an inner surface (32) defining the forwardly open cavity shaped and dimensioned to receive the body portion not being freed from skin
- the upper clamping surface (31) of the lower displaceable jaw (22) is in the open position thereof spaced from the lower clamping surface (26) of the upper fixed jaw (21) to receive the freed skin portion between said clamping faces.

2. Apparatus according to claim 1, wherein the pair of arms (23a,23b) of the upper fixed jaw (21) and/or the pair of arms (28a,28b) of the lower displaceable jaw (22) are mutually connected

3. Apparatus according to claim 1, wherein the skin moving means comprises a swivel arm (19), the skin-clamping device (8) being arranged at a first end (18) of the swivel arm (19), a second end (20) of the swivel arm being pivotally connected to the frame (1), said skin-clamping device (8) being by means of the swivel arm pivotal between the upper start and skin-clamping position and the lower position, and the upper fixed jaw (21) being connected to the swivel arm (19) and the lower displaceable arm (22) being displaceably connected to the swivel arm.

4. Apparatus according to claim 1, wherein the skin moving means comprises a conveyer, a chain drive and/or a track to which the skin-clamping device is connected.

5. Apparatus according to any of the preceding claims, wherein the cavity of the lower displaceable jaw (22) is shaped and dimensioned so that the inner surface (32) thereof engages at least opposite lateral portions of the body not freed from skin when the body is received in the cavity.

6. Apparatus according to any of the preceding claims, wherein the cavity (24) of the fixed jaw (21) is shaped and dimensioned so that the inner surface (27) thereof engages at least lateral portions of the body when the body is received in the cavity.

7. Apparatus according to any of the preceding claims, wherein the arms (28a,28b) of the lower displaceable jaw (22) of the skin-clamping device (8) are elongated arms providing an elongated inner surface (32) as seen in the displacement direction thereof, said inner surface providing a support face for a body received in the cavity defined by the elongated arms.

8. Apparatus according to any of the preceding claims, wherein the apparatus, optionally the skin-clamping device thereof, is provided with a tail clamp (34) for clamping the freed skin of the tail (43) of a body received in the skin clamping device (8), the tail clamp being arranged movably between a tail-clamping position in which the tail is clamped between the jaws of the tail clamp and a rest position or inactive position in which the tail clamp (34) is positioned laterally outside a vertical area defined by the openings (25;30) of the skin clamping device (8).

9. Apparatus according to claim 8, wherein the tail clamp (34) is arranged at a first end of an tail clamp arm (35), a second end of the tail clamp arm being arranged pivotally relative to the skin-clamping device (8), the tail clamp (34) being, by means of the tail clamp arm (35), pivotal between the inactive or rest position and the tail-clamping position.

10. Apparatus according to any of the claims 8 and 9, wherein the tail-clamping position is in a plane essentially defined by the lower clamping face (26) of the upper fixed jaw (21) of the skin-clamping device (8) and the tail clamp (34) arranged to clamp the tail (43) in said plane and preferably in a position essentially directly in front of the opening (25) of the upper jaw (21) of the skin clamping device (8).

11. Apparatus according to any of the preceding claims, wherein the apparatus comprises a body movement means (12,13,14) cooperating with or being a part of the body-clamping device (6) for providing an upwardly and rearwardly movement of the body clamped therein between the clamping position and a discharge position where the body completely freed from skin is discharged.

12. Apparatus according to claim 11, wherein the body movement means is arranged to move the body-clamping device with at least two different speeds from the clamping position to the discharge position, comprising a first speed and a second speed, the first speed being higher than the second speed.

13. Apparatus according to any of the claims 11 and 12, wherein the body movement means comprises stop means for slowing down, and/or interrupting or stopping the movement of the body-clamping device (6) at one or more adjustable positions between the clamping position and the discharge position.

14. Apparatus according to any of the preceding claims, wherein the skin moving means is arranged to move the skin-clamping device (8) with at least two different speeds from the upper start position to the lower end position comprising a first predefined speed and a second predefined speed, the first predefined speed being higher than the second predefined speed.

15. Apparatus according to any of the preceding claims, wherein the skin moving means is provided with stop means for slowing down and/or interrupting or stopping the movement of the skin-clamping device at one or more adjustable positions between the upper start and skin clamping position and the lower end position.

## Patentansprüche

1. Enthäutungsvorrichtung zum Enthäuten von Pelztieren, besonders von Nerzen, die entlang und zwischen den Beinen aufgeschnitten wurden und von denen die Haut gelöst und vom hinteren Teil des Körpers und den Hinterbeinen und dem Schwanz befreit wurde, wobei die Vorrichtung Folgendes umfasst:
- einen Rahmen (1) mit einer Vorderseite (2), einer Rückseite (3), einer Oberseite (5) und einer Unterseite (4),
- eine Körpereinklemmvorrichtung (6) zum Einklemmen der von der Haut befreiten Beine (7) und/oder des hinteren Teils des Körpers in einer Start- und Körpereinklemmposition und die an der Vorderseite zugänglich ist,
- eine Hauteinklemmvorrichtung (8) zum Einklemmen der vom Körper befreiten Haut und die mittels eines Haut bewegenden Mittels angeordnet ist zur nach unten und nach hinten gerichteten Bewegung der Hauteinklemmvorrichtung (8) zwischen einer oberen Start- und Hauteinklemmposition und einer - in einem Abstand zur oberen Hauteinklemmposition - unteren Position und in der die Haut vollständig vom Körper getrennt wurde,
- die Hauteinklemmvorrichtung (8), die in der oberen Hauteinklemmposition benachbart zur Körpereinklemmvorrichtung (6) positioniert ist und an der Vorderseite zugänglich ist,
wobei
- die Hauteinklemmvorrichtung (8) eine obere feststehende Backe (21) und eine untere bewegliche Backe (22) umfasst, die zwischen einer offenen Position und einer geschlossen Einklemmposition von der feststehenden Backe (21) weg- und auf sie zubewegt werden kann,
- die obere feststehende Backe (21) eine nach vorn offene Backe ist, die ein Paar von Armen (23a,23b) umfasst, die so geformt sind, dass sie eine nach vorn offene Kavität (24) mit einer nach vorn zeigenden Öffnung (25) definieren, und die eine untere Einklemmfläche (26) und eine innere Oberfläche (27) aufweist, die die nach vorne offene Kavität definieren, die so geformt und bemessen ist, dass sie den von der Haut befreiten Körperteil aufnimmt,
- die untere bewegliche Backe (22) eine nach vorn offene Backe ist, die ein Paar von Armen (28a,28b) umfasst, die so geformt sind, dass sie eine nach vorn offene Kavität (29) mit einer nach vorn zeigenden Öffnung (30) definieren, und die eine obere Einklemmfläche (31) und eine innere Oberfläche (32) aufweist, die die nach vorne offene Kavität definieren, die so geformt und bemessen ist, dass sie den nicht von Haut befreiten Körperteil aufnimmt,
- sich die obere Einklemmoberfläche (31) der unteren beweglichen Backe (22) in der offenen Position davon und beabstandet von der unteren Einklemmoberfläche (26) der oberen feststehenden Backe (21) befindet, um den befreiten Hautteil zwischen den Einklemmflächen aufzunehmen.

2. Vorrichtung nach Anspruch 1, wobei das Paar von Armen (23a,23b) der oberen feststehenden Backe (21) und/oder das Paar von Armen (28a,28b) der unteren beweglichen Backe (22) miteinander verbunden sind.

3. Vorrichtung nach Anspruch 1, wobei das Haut bewegende Mittel einen Schwenkarm (19) umfasst, die Hauteinklemmvorrichtung (8) an einem ersten Ende (18) des Schwenkarms (19) angeordnet ist, ein zweites Ende (20) des Schwenkarms schwenkbar mit dem Rahmen (1) verbunden ist, die Hauteinklemmvorrichtung (8) mittels des Schwenkarms zwischen der oberen Start- und Hauteinklemmposition und der unteren Position schwenkbar ist und die obere feststehende Backe (21) mit dem Schwenkarm (19) verbunden ist und der untere bewegliche Arm (22) beweglich mit dem Schwenkarm verbunden ist.

4. Vorrichtung nach Anspruch 1, wobei das Haut bewegende Mittel einen Förderer, einen Kettenantrieb und/oder eine Spur umfasst, mit dem/der die Hauteinklemmvorrichtung verbunden ist.

5. Vorrichtung nach einem der vorhergehenden Ansprüche, wobei die Kavität der unteren beweglichen Backe (22) so geformt und bemessen ist, dass die innere Oberfläche (32) davon mit mindestens gegenüberliegenden seitlichen Teilen des Körpers, die nicht von Haut befreit sind, in Eingriff gelangt, wenn der Körper in die Kavität aufgenommen wird.

6. Vorrichtung nach einem der vorhergehenden Ansprüche, wobei die Kavität (24) der feststehenden Backe (21) so geformt und bemessen ist, dass die innere Oberfläche (27) davon mit mindestens seitlichen Teilen des Körpers in Eingriff gelangt, wenn der Körper in die Kavität aufgenommen wird.

7. Vorrichtung nach einem der vorhergehenden Ansprüche, wobei die Arme (28a,28b) der unteren beweglichen Backe (22) der Hauteinklemmvorrichtung (8) verlängerte Arme sind, die eine verlängerte innere Oberfläche (32), gesehen in Richtung der Bewegung davon, bereitstellt, wobei die innere Oberfläche eine Auflagefläche für einen Körper bereitstellt, der in der durch die verlängerten Arme definierten Kavität aufgenommen ist.

8. Vorrichtung nach einem der vorhergehenden Ansprüche, wobei die Vorrichtung, wahlweise die Hauteinklemmvorrichtung davon, mit einer Schwanzklemme (34) zum Einklemmen der befreiten Haut des Schwanzes (43) eines in der Hauteinklemmvorrichtung (8) aufgenommenen Körpers bereitgestellt ist, wobei die Schwanzklemme zwischen einer Schwanzeinklemmposition, in der der Schwanz zwischen den Backen der Schwanzklemme eingeklemmt ist, und einer Ruhe- oder inaktiven Position, in der die Schwanzklemme (34) seitlich außerhalb eines durch die Öffnungen (25;30) der Hauteinklemmvorrichtung (8) definierten vertikalen Bereichs bewegbar angeordnet ist.

9. Vorrichtung nach Anspruch 8, wobei die Schwanzklemme (34) an einem ersten Ende eines Schwanzklemmenarms (35) angeordnet ist, ein zweites Ende des Schwanzklemmenarms relativ zur Hauteinklemmvorrichtung (8) schwenkbar angeordnet ist, die Schwanzklemme (34) mittels des Schwanzklemmenarms (35) zwischen der inaktiven oder Ruheposition und der Schwanzeinklemmposition schwenkbar ist.

10. Vorrichtung nach einem der Ansprüche 8 und 9, wobei die Schwanzeinklemmposition in einer Ebene liegt, die im Wesentlichen durch die untere Klemmfläche (26) der oberen feststehenden Backe (21) der Hauteinklemmvorrichtung (8) und die Schwanzklemme (34) definiert ist, die angeordnet ist, den Schwanz (43) in der Ebene und besonders in einer Position einzuklemmen, die sich im Wesentlichen direkt vor der Öffnung (25) der oberen Backe (21) der Hauteinklemmvorrichtung (8) befindet.

11. Vorrichtung nach einem der vorhergehenden Ansprüche, wobei die Vorrichtung ein Körperbewegungsmittel (12,13,14) umfasst, das mit der Körpereinklemmvorrichtung (6) zusammenarbeitet oder ein Teil davon ist, um eine nach oben und nach hinten gerichtete Bewegung des darin eingeklemmten Körpers zwischen der Einklemmposition und einer Abgabeposition, in der der vollständig von Haut befreite Körper abgegeben wird, bereitzustellen.

12. Vorrichtung nach Anspruch 11, wobei das Körperbewegungsmittel angeordnet ist, die Körpereinklemmvorrichtung mit mindestens zwei verschiedenen Geschwindigkeiten von der Einklemmposition in die Abgabeposition zu bewegen, eine erste und eine zweite Geschwindigkeit umfassend, wobei die erste Geschwindigkeit höher als die zweite Geschwindigkeit ist.

13. Vorrichtung nach einem der Ansprüche 11 und 12, wobei das Körperbewegungsmittel ein Anschlagmittel zum Verlangsamen und/oder Unterbrechen oder Anhalten der Bewegung der Körpereinklemmvorrichtung (6) an einer oder mehreren anpassbaren Positionen zwischen der Einklemmposition und der Abgabeposition umfasst.

14. Vorrichtung nach einem der vorhergehenden Ansprüche, wobei das Körperbewegungsmittel angeordnet ist, die Hauteinklemmvorrichtung (8) mit mindestens zwei verschiedenen Geschwindigkeiten von der oberen Startposition in die untere Endposition zu bewegen, eine erste vordefinierte Geschwindigkeit und eine zweite vordefinierte Geschwindigkeit umfassend, wobei die erste vordefinierte Geschwindigkeit höher als die zweite vordefinierte Geschwindigkeit ist.

15. Vorrichtung nach einem der vorhergehenden Ansprüche, wobei das Körperbewegungsmittel mit einem Anschlagmittel zum Verlangsamen und/oder Unterbrechen oder Anhalten der Bewegung der Hauteinklemmvorrichtung an einer oder mehreren anpassbaren Positionen zwischen der oberen Start- und Hauteinklemmposition und der unteren Endposition bereitgestellt ist.

## Revendications

1. Appareil de dépouillage pour le dépouillage d'animaux à fourrure, particulièrement de visons, qui ont été ouverts le long et entre les pattes et desquels la peau a été détachée et libérée de la partie arrière du corps et des pattes arrière et de la queue, ledit appareil comprenant
- une structure (1) présentant un avant (2), un arrière (3), un dessus (5) et un dessous (4)
- un dispositif de serrage de corps (6) pour le serrage desdites pattes (7) et/ou de la partie arrière du corps libéré de la peau dans une position de départ et de serrage de corps et étant accessible à l'avant,
- un dispositif de serrage de peau (8) pour le serrage de la peau libérée du corps et étant agencé à l'aide d'un moyen de déplacement de peau pour un mouvement vers le bas et l'arrière du dispositif de serrage de peau (8) entre une position de départ supérieure et de serrage de corps et une position inférieure à une distance de la position de serrage de peau supérieure et dans laquelle la peau a été complètement séparée du corps,
- le dispositif de serrage de peau (8) étant positionné adjacent au dispositif de serrage de corps (6) dans la position de serrage de peau supérieure et étant accessible à l'avant,
dans lequel
- le dispositif de serrage de peau (8) comprend une mâchoire fixe supérieure (21) et une mâchoire déplaçable inférieure (22) étant déplaçable loin de et vers la mâchoire fixe (21) entre une position ouverte et une position de serrage fermée,
- la mâchoire fixe supérieure (21) est une mâchoire ouverte vers l'avant comprenant une paire de bras (23a, 23b) formée pour définir une cavité ouverte vers l'avant (24) avec une ouverture tournée vers l'avant (25) et présentant une face de serrage inférieure (26) et une surface intérieure (27) définissant la cavité ouverte vers l'avant formée et dimensionnée pour recevoir la partie de corps libérée de la peau
- la mâchoire déplaçable inférieure (22) est une mâchoire ouverte vers l'avant comprenant une paire de bras (28a, 28b) formée pour définir une cavité ouverte vers l'avant (29) avec une ouverture tournée vers l'avant (30) et présentant une face de serrage supérieure (31) et une surface intérieure (32) définissant la cavité ouverte vers l'avant formée et dimensionnée pour recevoir la partie de corps qui n'est pas libérée de la peau
- la surface de serrage supérieure (31) de la mâchoire déplaçable inférieure (22) est espacée de la surface de serrage inférieure (26) de la mâchoire fixe supérieure (21) dans la position ouverte de celle-ci pour recevoir la partie de peau libérée entre lesdites faces de serrage.

2. Appareil selon la revendication 1, dans lequel la paire de bras (23a, 23b) de la mâchoire fixe supérieure (21) et/ou la paire de bras (28a, 28b) de la mâchoire déplaçable inférieure (22) sont reliées mutuellement.

3. Appareil selon la revendication 1, dans lequel le moyen de déplacement de peau comprend un bras articulé (19), le dispositif de serrage de peau (8) étant agencé à une première extrémité (18) du bras articulé(19), une deuxième extrémité (20) du bras articulé étant reliée de manière pivotante à la structure (1), ledit dispositif de serrage de peau (8) étant pivotant à l'aide du bras articulé entre la position de départ supérieure et de serrage de peau et la position inférieure, et la mâchoire fixe supérieure (21) étant reliée au bras articulé (19) et le bras déplaçable inférieur (22) étant relié de manière déplaçable au bras articulé.

4. Appareil selon la revendication 1, dans lequel le moyen de déplacement de peau comprend un convoyeur, un entraînement à chaîne et/ou une piste auxquels le dispositif de serrage de peau est relié.

5. Appareil selon l'une quelconque des revendications précédentes, dans lequel la cavité de la mâchoire déplaçable inférieure (22) est formée et dimensionnée de sorte que la surface intérieure (32) de celle-ci engage au moins des parties latérales en regard du corps non libéré de la peau lorsque le corps est reçu dans la cavité.

6. Appareil selon l'une quelconque des revendications précédentes, dans lequel la cavité (24) de la mâchoire fixe (21) est formée et dimensionnée de sorte que la surface intérieure (27) de celle-ci engage au moins des parties latérales du corps lorsque le corps est reçu dans la cavité.

7. Appareil selon l'une quelconque des revendications précédentes, dans lequel les bras (28a, 28b) de la mâchoire déplaçable inférieure (22) du dispositif de serrage de peau (8) sont des bras allongés fournissant une surface intérieure allongée (32) tel que vu dans la direction de déplacement de celle-ci, ladite surface intérieure fournissant une face de support pour un corps reçu dans la cavité définie par les bras allongés.

8. Appareil selon l'une quelconque des revendications précédentes, dans lequel l'appareil, en option le dispositif de serrage de peau de celui-ci, est doté d'un pince-queue (34) pour le serrage de la peau libérée de la queue (43) d'un corps reçu dans le dispositif de serrage de peau (8), le pince-queue étant agencé de manière mobile entre une position de serrage de queue, dans laquelle la queue est serrée entre les mâchoires du pince-queue et une position de repos ou position inactive, dans laquelle le pince-queue (34) est positionné latéralement en dehors d'une zone verticale définie par les ouvertures (25 ; 30) du dispositif de serrage de peau (8).

9. Appareil selon la revendication 8, dans lequel le pince-queue (34) est agencé à une première extrémité d'un bras de pince-queue (35), une deuxième extrémité du bras de pince-queue étant agencée de manière pivotante par rapport au dispositif de serrage de peau (8), le pince-queue (34) étant pivotant à l'aide du bras de pince-queue (35) entre la position inactive ou de repos et la position de serrage de queue.

10. Appareil selon l'une quelconque des revendications 8 et 9, dans lequel la position de serrage de queue est essentiellement définie dans un plan par la face de serrage inférieure (26) de la mâchoire fixe supérieure (21) du dispositif de serrage de peau (8) et le pince-queue (34) agencé pour serrer la queue (43) dans ledit plan et de préférence dans une position essentiellement directement en face de l'ouverture (25) de la mâchoire supérieure (21) du dispositif de serrage de peau (8).

11. Appareil selon l'une quelconque des revendications précédentes, dans lequel l'appareil comprend un moyen de mouvement de corps (12, 13, 14) coopérant avec ou faisant partie du dispositif de serrage de corps (6) pour fournir un mouvement vers le haut et l'arrière du corps serré dedans entre la position de serrage et une position d'évacuation où le corps complètement libéré de la peau est évacué.

12. Appareil selon la revendication 11, dans lequel le moyen de mouvement de corps est agencé pour déplacer le dispositif de serrage de corps à au moins deux différentes vitesses de la position de serrage à la position d'évacuation, comprenant une première vitesse et une deuxième vitesse, la première vitesse étant supérieure à la deuxième vitesse.

13. Appareil selon l'une quelconque des revendications 11 et 12, dans lequel le moyen de mouvement de corps comprend un moyen d'arrêt pour ralentir et/ou interrompre ou arrêter le mouvement du dispositif de serrage de corps (6) dans une ou plusieurs positions ajustables entre la position de serrage et la position d'évacuation.

14. Appareil selon l'une quelconque des revendications précédentes, dans lequel le moyen de déplacement de peau est agencé pour déplacer le dispositif de serrage de peau (8) à au moins deux différentes vitesses depuis la position de départ supérieure à la position d'extrémité inférieure comprenant une première vitesse prédéfinie et une deuxième vitesse prédéfinie, la première vitesse prédéfinie étant supérieure à la deuxième vitesse prédéfinie.

15. Appareil selon l'une quelconque des revendications précédentes, dans lequel le moyen de déplacement de peau est doté d'un moyen d'arrêt pour ralentir et/ou interrompre ou arrêter le mouvement du dispositif de serrage de peau dans une ou plusieurs positions ajustables entre la position de départ supérieure et de serrage de peau et la position d'extrémité inférieure.
